# EUROPEAN PATENT APPLICATION

(11) **EP 4 647 718 A1**
(43) Date of publication of application: **12.11.2025**
(21) Application number: 23914514.7
(22) Date of filing: 20.12.2023
(51) Int. Cl.: G01C 21/00, G06T 3/00

(54) **MAP PROCESSING METHOD, MAP PROCESSING APPARATUS, MEDIUM AND ELECTRONIC DEVICE**

(30) Priority: 03.01.2023 CN 202310004918
(71) Applicant: Beijing Roborock Innovation Technology Co., Ltd., Beijing 102206 (CN)
(72) Inventor: JIN, Guojun, Beijing 102206 (CN); HOU, Zhengtao, Beijing 102206 (CN)
(74) Representative: Cabinet Beau de Loménie
(86) International application number: PCT/CN2023/140265
(87) International publication number: WO 2024/146381

(57) **Abstract**

A map processing method, a map processing apparatus, a computer readable storage medium, and an electronic device. The method comprises: acquiring a map image, the map image being used for representing a movable area of a movable object (S110); identifying from the map image a target area having a preset feature(S120); and performing map optimization processing on the target area (S130). The method can process maps, thereby improving the accuracy and attractiveness.

## Description

### CROSS-REFERENCE TO RELATED APPLICATIONS

The present application claims priority to the Chinese Patent Application No. 202310004918.2, filed on January 3, 2023, which is incorporated herein by reference in its entirety as a part of the present application.

### TECHNICAL FIELD

The present disclosure relates to the field of smart homes, in particular to a map processing method, a map processing apparatus, a computer-readable storage medium and an electronic device.

### BACKGROUND ART

In recent years, with the rapid development of computer technologies and artificial intelligence science, an intelligent robot technology has gradually become a hot spot in the field of modern robot research, and has a wide range of applications in different scenarios including homes, shopping malls, restaurants, etc., such as performing sweeping by cleaning robots, performing warehouse inspection by inspection robots, and performing cargo handling by handling robots.

At present, before working, the robot usually senses the surrounding environment to build a map of the current scene environment, and then completes the work process based on this map. However, in the process of building the map, the generated map is often not accurate enough due to some interference factors. For example, due to inherent characteristics of devices, the generated map may include some non-existent or inaccessible regions, etc., which may affect the working process of the robot and cause poor user experience.

Therefore, how to perform optimization processing on the map to ensure the accuracy of the robot's work is an urgent problem to be solved in the related art.

### SUMMARY OF THE INVENTION

An objective of the present disclosure is to provide a map processing method, a map processing apparatus, a computer-readable storage medium and an electronic device, to solve the problem of inaccurate map building in the related art. The specific solutions are described as below.

According to a first aspect of the present disclosure, a map processing method is provided. The method includes: acquiring a map image, the map image being intended to represent an accessible region of a movable object; identifying from the map image a target region having a preset feature; and performing map optimization processing on the target region.

In an exemplary embodiment of the present disclosure, pixel points of the map image include valid points, obstacle points or unknown points; the target region includes a narrow region inaccessible by the movable object; and identifying from the map image the target region having the preset feature includes: sequentially traversing the pixel points within each arrangement unit of the map image, the arrangement unit including a row or a column; adding a current valid point to a narrow region point set in response to a distance between two non-valid points nearest to the current valid point and located in different directions of the current valid point within a current arrangement unit being less than a first threshold, the current valid point being a currently traversed valid point, the non-valid points including obstacle points or unknown points; and determining the narrow region according to the narrow region point set.

In an exemplary embodiment of the present disclosure, identifying from the map image the target region having the preset feature further includes: adding two non-valid points nearest to the current valid point and located in different directions of the current valid point within the current arrangement unit, and other pixel points between the two non-valid points to the narrow region point set when adding the current valid point to the narrow region point set.

In an exemplary embodiment of the present disclosure, identifying from the map image the target region having the preset feature further includes: increasing, after traversing pixel points within the current arrangement unit, a length parameter of the narrow region point set by one in response to at least one pixel point within the current arrangement unit being added to the narrow region point set; and identifying a region formed by pixel points in the narrow region point set as the narrow region when the length parameter is greater than or equal to a second threshold.

In an exemplary embodiment of the present disclosure, sequentially traversing the pixel points within each arrangement unit of the map image includes: sequentially traversing each column of pixel points of the map image in a width direction of the map image, and sequentially traversing each row of pixel points of the map image in a height direction of the map image.

In an exemplary embodiment of the present disclosure, performing map optimization processing on the target region includes: adjusting pixel points within the narrow region to unknown points.

In an exemplary embodiment of the present disclosure, pixel points of the map image include valid points, obstacle points or unknown points; the target region includes an overflow region; and identifying from the map image the target region having the preset feature includes: determining from the map image one or more first regions to be identified; acquiring a number of obstacle points and a number of valid points in the first region to be identified; determining, according to the number of obstacle points in the first region to be identified, a third threshold corresponding to the first region to be identified, the third threshold representing a maximum area of a rectangle enclosed by the obstacle points in the first region to be identified as two sides of the rectangle; and determining the first region to be identified as the overflow region in response to the number of valid points in the first region to be identified exceeding the third threshold.

In an exemplary embodiment of the present disclosure, determining, according to the number of obstacle points in the first region to be identified, the third threshold corresponding to the first region to be identified includes: determining, according to the number of obstacle points in the first region to be discriminated, a number of pixel points that may be accommodated in a square region enclosed by the obstacle points as two sides of the square, to be used as the third threshold corresponding to the first region to be identified.

In an exemplary embodiment of the present disclosure, determining from the map image one or more first regions to be identified includes: extending a boundary in the map image, and determining from the map image one or more independent regions based on the extended boundary as the first region(s) to be identified, where the boundary before extending is a straight line constituted by obstacle points or by obstacle points and unknown points.

In an exemplary embodiment of the present disclosure, extending the boundary in the map image includes: extending the boundary from any end, and in response to an extended part being connected to the unknown points or the obstacle points other than the boundary when a length of the extended part does not exceed a fourth threshold, retaining the part extending from the any end to the connected point; and in response to the extended part being not connected to the unknown points or the obstacle points other than the boundary when the length of the extended part reaches the fourth threshold, canceling the extending from the any end.

In an exemplary embodiment of the present disclosure, the number of obstacle points or the number of both obstacle points and unknown points, which constitute the boundary before extending, is not less than a preset number.

In an exemplary embodiment of the present disclosure, before extending the boundary in the map image, the method further includes: in response to the presence of an obstacle point cluster having no more than *p* pixel points, and the obstacle point cluster being surrounded by valid points or unknown points, modifying the adjacent obstacle points into valid points; and in response to the presence of an unknown point cluster having no more than q pixel points, and the unknown point cluster being surrounded by valid points or obstacle points, modifying the adjacent unknown points into valid points, where *p* and *q* are positive integers.

In an exemplary embodiment of the present disclosure, when extending the boundary in the map image, the method further includes: generating a boundary image of the same size as the map image, and saving information of the extended boundary in the boundary image but not in the map image.

In an exemplary embodiment of the present disclosure, performing map optimization processing on the target region includes: adjusting valid points in the overflow region to unknown points.

In an exemplary embodiment of the present disclosure, pixel points of the map image include valid points, obstacle points or unknown points; the target region includes an isolated region; and identifying from the map image the target region having the preset feature includes: determining from the map image one or more second regions to be identified; and determining the second region to be identified as the isolated region in response to a number of obstacle points in the second region to be identified being less than a fifth threshold.

In an exemplary embodiment of the present disclosure, determining from the map image one or more second regions to be identified includes: taking a region formed by adjacent valid points and obstacle points in the map image as the second region to be identified.

In an exemplary embodiment of the present disclosure, determining from the map image one or more second regions to be identified includes: determining from the map image one or more second regions to be identified when map optimization processing has been performed on the narrow region and/or the overflow region in the map image.

In an exemplary embodiment of the present disclosure, performing map optimization processing on the target region includes: adjusting pixel points in the isolated region to unknown points.

According to a second aspect of the present disclosure, a map processing apparatus is provided. The map processing apparatus includes: a map image acquiring module configured to acquire a map image, the map image being intended to represent an accessible region of a movable object; a target region identifying module configured to identify from the map image a target region having a preset feature; and a map optimization processing module configured to perform map optimization processing on the target region.

In an exemplary embodiment of the present disclosure, the target region identifying module further includes a pixel point adding unit configured to add two non-valid points nearest to a current valid point and located in different directions of the current valid point within the current arrangement unit, and other pixel points between the two non-valid points to the narrow region point set when adding the current valid point to the narrow region point set.

In an exemplary embodiment of the present disclosure, the target region identifying module further includes: a length parameter updating unit configured to increase, after traversing pixel points within the current arrangement unit, a length parameter of the narrow region point set by one in response to at least one pixel point within the current arrangement unit being added to the narrow region point set; and a region identifying unit configured to identify a region formed by pixel points in the narrow region point set as a narrow region when the length parameter is greater than or equal to a second threshold.

In an exemplary embodiment of the present disclosure, a pixel point traversing unit includes: a sequential traversing subunit configured to sequentially traverse each column of pixel points of the map image in a width direction of the map image, and sequentially traverse each row of pixel points of the map image in a height direction of the map image.

In an exemplary embodiment of the present disclosure, the map optimization processing module includes: a first processing unit configured to adjust pixel points in the narrow region to unknown points.

In an exemplary embodiment of the present disclosure, pixel points of the map image include valid points, obstacle points or unknown points; the target region includes an overflow region; and the target region identifying module includes: a first region determining unit configured to determine from the map image one or more first regions to be identified; a quantity acquiring unit configured to acquire a number of obstacle points and a number of valid points in the first region to be identified; a threshold determining unit configured to determine, according to the number of obstacle points in the first region to be identified, a third threshold corresponding to the first region to be identified, the third threshold representing a maximum area of a rectangle enclosed by the obstacle points in the first region to be identified as two sides of the rectangle; and an overflow region determining unit configured to determine the first region to be identified as an overflow region in response to the number of valid points in the first region to be identified exceeding the third threshold.

In an exemplary embodiment of the present disclosure, the threshold determining unit includes: a pixel point quantity equivalence subunit configured to determine, according to the number of obstacle points in the first region to be identified, the number of pixel points that may be accommodated in a square region enclosed by the obstacle points as two sides of the square, to be used as the third threshold corresponding to the first region to be identified.

In an exemplary embodiment of the present disclosure, the first region determining unit includes: a boundary extending subunit configured to extend a boundary in the map image, and determine from the map image one or more independent regions based on the extended boundary as the first region(s) to be identified, wherein the boundary before extending is a straight line constituted by obstacle points or by obstacle points and unknown points.

In an exemplary embodiment of the present disclosure, the boundary extending subunit is configured to: extend the boundary from any end, and in response to an extended part being connected to the unknown points or the obstacle points other than the boundary when a length of the extended part does not exceed a fourth threshold, retain the part extending from the any end to the connected point; and in response to the extended part being not connected to the unknown points or the obstacle points other than the boundary when the length of the extended part reaches the fourth threshold, cancel the extending from the any end.

In an exemplary embodiment of the present disclosure, the number of obstacle points or the number of both obstacle points and unknown points, which constitute the boundary before extending, is not less than a preset number.

In an exemplary embodiment of the present disclosure, the map processing apparatus may further include: a first modifying module configured to, in response to the presence of an obstacle point cluster having no more than *p* pixel points, and the obstacle point cluster being surrounded by valid points or unknown points, modify the adjacent obstacle points into valid points; and a second modifying module configured to, in response to the presence of an unknown point cluster having no more than q pixel points, and the unknown point cluster being surrounded by valid points or obstacle points, modify the adjacent unknown points into valid points, where *p* and *q* are positive integers.

In an exemplary embodiment of the present disclosure, the map processing apparatus may further include: a boundary information processing module configured to, when extending the boundary in the map image, generate a boundary image of the same size as the map image, and save information of the extended boundary in the boundary image but not in the map image.

In an exemplary embodiment of the present disclosure, the map optimization processing module includes: a second processing unit configured to adjust valid points in the overflow region to unknown points.

In an exemplary embodiment of the present disclosure, pixel points of the map image include valid points, obstacle points or unknown points; the target region includes an isolated region; and the target region identifying module includes: a second region determining unit configured to determine from the map image one or more second regions to be identified; and an isolated region determining unit configured to determine the second region to be identified as the isolated region in response to a number of obstacle points in the second region to be identified being less than a fifth threshold.

In an exemplary embodiment of the present disclosure, the second region determining unit is configured to take a region formed by adjacent valid points and obstacle points in the map image as the second region to be identified.

In an exemplary embodiment of the present disclosure, the second region determining unit is configured to: determine from the map image one or more second regions to be identified when map optimization processing has been performed on the narrow region and/or the overflow region in the map image.

In an exemplary embodiment of the present disclosure, the map optimization processing module includes: a third processing unit configured to adjust pixel points in the isolated region to unknown points.

In a third aspect, the present disclosure provides a computer-readable storage medium having a computer program stored thereon, where the computer program, when executed by a processor, causes the processor to implement the map processing method as described above.

In a fourth aspect, the present disclosure provides an electronic device, including: a processor; and a memory configured to store executable instructions of the processor, where the processor is configured to execute the map processing method as described above by executing the executable instructions.

It is to be understood that both the foregoing general descriptions and the following detailed descriptions are exemplary and explanatory only and are not restrictive of the present disclosure.

### BRIEF DESCRIPTION OF THE DRAWINGS

The accompanying drawings herein, which are incorporated into the Description and constitute a part of the Description, show embodiments conforming to the present disclosure, and are used to explain the principles of the present disclosure together with the Description. Apparently, the accompanying drawings in the following description show merely some embodiments of the present disclosure, and those of ordinary skill in the art can also derive other accompanying drawings from these accompanying drawings without creative efforts. In the accompanying drawings:
FIG. 1 schematically shows a flowchart of an image processing method according to an exemplary embodiment;
FIG. 2 schematically shows a schematic diagram of a narrow region according to an exemplary embodiment;
FIG. 3 schematically shows a schematic diagram of another narrow region according to an exemplary embodiment;
FIG. 4 schematically shows a sub-flowchart of the image processing method according to an exemplary embodiment;
FIG. 5 schematically shows a schematic diagram of traversal of a through-wall region according to an exemplary embodiment;
FIG. 6 schematically shows another schematic diagram of traversal of the through-wall region according to an exemplary embodiment;
FIG. 7 schematically shows a schematic diagram of a pixel point region constituted by a plurality of narrow region point sets according to an exemplary embodiment;
FIG. 8 schematically shows a schematic diagram of different narrow region point sets determined by traversal in different directions according to an exemplary embodiment;
FIG. 9 schematically shows a schematic diagram of a local map image after pixel points in the narrow region point set are processed according to an exemplary embodiment;
FIG. 10 schematically shows comparative schematic diagrams before and after the narrow region is processed according to an exemplary embodiment;
FIG. 11 schematically shows additional comparative schematic diagrams before and after the narrow region is processed according to an exemplary embodiment;
FIG. 12 schematically shows a schematic flowchart of identifying and processing the narrow region according to an exemplary embodiment;
FIG. 13 schematically shows a schematic diagram of an overflow region according to an exemplary embodiment;
FIG. 14 schematically shows a schematic diagram of another overflow region according to an exemplary embodiment;
FIG. 15 schematically shows another sub-flowchart of the image processing method according to an exemplary embodiment;
FIG. 16 schematically shows a schematic diagram of a region surrounded by pixel points according to an exemplary embodiment;
FIG. 17 schematically shows a schematic diagram of extension of boundary points according to an exemplary embodiment;
FIG. 18 schematically shows comparative schematic diagrams before and after the overflow region is processed according to an exemplary embodiment;
FIG. 19 schematically shows yet another sub-flowchart of the image processing method according to an exemplary embodiment;
FIG. 20 schematically shows comparative schematic diagrams before and after an isolated region is processed according to an exemplary embodiment;
FIG. 21 schematically shows a structural block diagram of an image processing apparatus according to an exemplary embodiment; and
FIG. 22 schematically shows an electronic device for implementing the above method according to an exemplary embodiment.

### DETAILED DESCRIPTION

To make the objectives, technical solutions and advantages of the present disclosure clearer, the present disclosure will be further described in detail below with reference to the accompanying drawings. Apparently, the described embodiments are only some, but not all of the embodiments of the present disclosure. All other embodiments acquired by those of ordinary skills in the art without creative efforts based on the embodiments in the present disclosure are within the protection scope of the present disclosure.

The terminology used in the embodiments of the present disclosure is for the purpose of describing particular embodiments only and is not intended to limit the present disclosure. As used in the embodiments of the present disclosure and the appended claims, the singular forms "a", "an" and "the" are intended to include plural referents unless the context clearly indicates otherwise. The term "a plurality of" generally includes at least two.

It should be understood that the term "and/or" used herein merely describes an associative relationship between related objects, indicating three possible scenarios. For example, "A and/or B" may represent: A exists alone, A and B exist concurrently, or B exists alone. Additionally, the character "/" in this document generally signifies an "or" relationship between the preceding and following associated objects.

It should be understood that although terms such as "first", "second" and "third" may be used in the embodiments of the present disclosure to describe certain elements, these elements should not be limited by these terms. These terms are only used to distinguish one described element from another. For example, without departing from the scope of the embodiments of the present disclosure, a "first" element may also be referred to as a "second" element, and similarly, a "second" element may be referred to as a "first" element.

Depending on the context, the word "if" as used herein may be interpreted as "when" or "in response to determining" or "in response to detecting". Similarly, depending on the context, the phrases "if it is determined that" or "if it is detected that (the stated condition or event)" may be interpreted as "when it is determined that" or "in response to determining" or "when it is detected that (the stated condition or event)" or "in response to detecting (the stated condition or event)".

It should also be noted that, the terms "including", "containing", or any other variants thereof are intended to cover the nonexclusive inclusion, such that a commodity or apparatus including a series of elements includes not only those elements, but also other elements not listed explicitly or elements inherent to such a commodity or apparatus. Without more limitations, the element defined by the phrase "including a ..." does not exclude the existence of other same elements in the commodity or apparatus including the element.

At present, various functional intelligent robots are widely used, such as cleaning robots, inspection robots, handling robots and unmanned vehicles. A cleaning robot belongs to a type of smart home appliances configured with artificial intelligence that can automatically complete a floor cleaning task in a room. It generally employs brush sweeping and vacuum manners to first suck debris on the ground into its built-in dustbin, thereby completing a floor cleaning function.

The movement trajectory of the intelligent robot is generally determined based on a pre-built map. When the map is inaccurate, for example, when the map includes a non-existent or inaccessible region, the working efficiency and accuracy of the intelligent robot may be influenced. For example, since the cleaning robot cannot clean the inaccessible region in the map, the robot may cross back and forth many times near the region, leading to extended cleaning time or a failure to complete the cleaning even within a long period of time. In addition, the inaccuracy of the map will also affect the aesthetic appearance of the map, which in turn affects the user experience in many aspects.

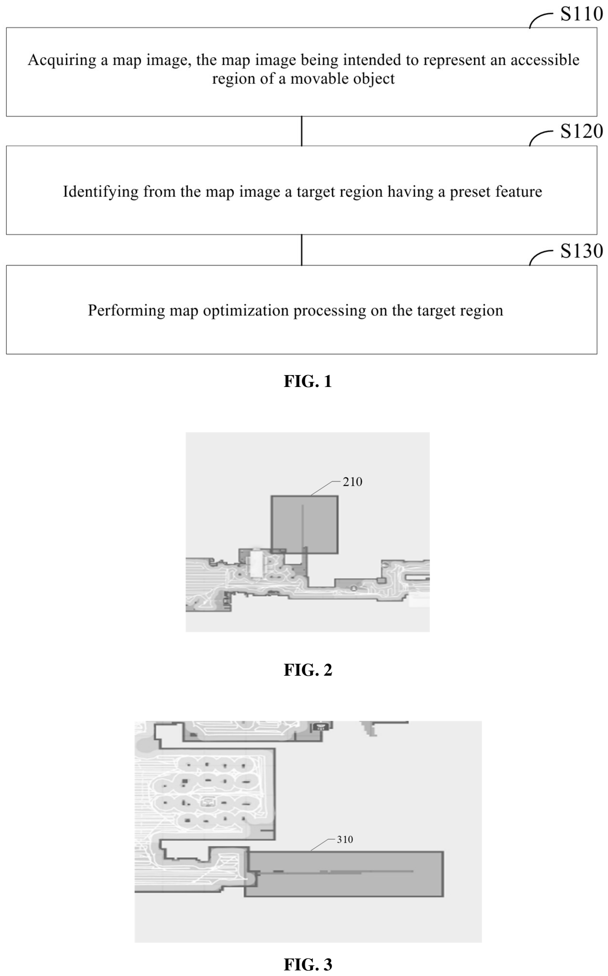

Based on this, an exemplary embodiment of the present disclosure provides a map processing method, which may be applied to various mobile intelligent terminals such as cleaning robots, inspection robots and handling robots. These intelligent robots may implement the method through hardware and/or software. FIG. 1 is referred to, which shows a flowchart of a map processing method according to an exemplary embodiment of the present disclosure, the method may include the following steps S110-S130.

In the step S110, a map image is acquired, the map image being intended to represent an accessible region of a movable object.

The movable object is an intelligent robot that can move in a scene to perform specific tasks, such as a cleaning robot, an inspection robot, a handling robot and a dish delivery robot. The map image is a two-dimensional or multi-dimensional image capable of reflecting the position, shape, distribution, etc. of the scene. The movable object may work or be located in the scene based on the map image. The map image may be a map built in real time based on a sensing apparatus of the movable object, a map updated later, a historical map obtained from a map data source, etc.

Usually, the movable object, when entering a working region for the first time, may build a map of the working region. For example, when the cleaning robot enters a region to be cleaned for the first time, a map building mode may be started to build a map of the region to be cleaned. The method for building the map includes but is not limited to the followings: using a SLAM (Simultaneous Localization and Mapping, Simultaneous Localization and Mapping ) map and a positioning building module to locate the cleaning robot, and at the same time, building a map of the position where the cleaning robot is located. The cleaning robot may be equipped with a laser emitter, the laser emitter emits laser, the laser is reflected when encountering an obstacle, and the SLAM builds a map according to the emitted and reflected laser.

It should be noted that all existing methods that can be used for building the map image corresponding to the movable object in this embodiment are included in the scope of protection of the present disclosure. After completing building of the map image, the intelligent robot may store the map image for later use in working or positioning.

In the step S120, a target region having a preset feature is identified from the map image.

The target region is a region in the map image where map optimization needs to be performed. The target region may be either discrete or continuous, and may be in various shapes, such as a rectangle, a circle and other regular shapes, or an overflow shape and other irregular shapes. Usually, the target region has a preset feature. For example, a narrow target region has a small width, which is generally less than the distance that the movable object may cover; or a region where an isolated target region is located is generally not directly connected to other regions. Since different target regions usually have different preset features, in this exemplary embodiment, by identifying the map image, the target region having the preset feature may be determined therefrom. Various specific identifying methods may be included. For example, each pixel point in the map image may be traversed to identify the target region according to a traversal result; alternatively, a suspected sub-image of the target region may be determined from the map image first, and pixel points of the sub-image are traversed to identify the target region having the preset feature; alternatively, a neural network model may also be trained in advance with sample maps and corresponding feature tags, and the map image may be processed by the trained neural network model to obtain the target region having the preset feature; in addition, a classic computer vision algorithm may also be adopted to identify the target region through a series of transformation operations, etc. The specific method to be used can be determined according to various requirements such as an actual scene, calculation amount and power consumption, which is not specifically limited in the present disclosure.

In the step S 130, map optimization processing is performed on the target region.

In this exemplary embodiment, after determination of the target region, the target region may be processed to optimize the map image. Usually, the map image includes pixel point regions with different values, different pixel values may represent different objects, and these pixel points may be classified into three categories, namely, valid points, obstacle points and unknown points. The valid point is a point that the intelligent robot can identify and reach; the obstacle point is a point where an obstacle identified by the intelligent robot is located or a point where a boundary is located; and the unknown point is a point not identified by the intelligent robot in the whole space of the map. In this exemplary embodiment, the target region is generally composed of points other than unknown points before processing, and displaying the target region in the map has a specific meaning. Considering that the target region is a redundant region and has an impact on the overall accuracy and the aesthetic appearance of the map image, the target region may be removed. The specific operation may involve updating the pixel points in the target region, such as, updating the pixel values of the pixel points in the target region, or setting the pixel points in the target region as unknown points.

Based on the above descriptions, in this exemplary embodiment, the map image is acquired, the map image being intended to represent the accessible region of the movable object; the target region having the preset feature is identified from the map image; and map optimization processing is performed on the target region. In one aspect, in this exemplary embodiment, by identifying the map image, the target region is determined from the map image, and the target region is processed. Since the target region has the preset feature, the map optimization processing is performed more targeted, which improves the efficiency and effectiveness of the map optimization processing. In another aspect, in this exemplary embodiment, optimization processing of the target region in the map image can be realized by a simple process, so that the working efficiency of the intelligent robot moving in the map region can be improved while the aesthetic appearance of the map image is improved, which in turn provides a user with a good service experience.

In an exemplary embodiment, the pixel points of the map image include valid points, obstacle points or unknown points. The map image may consist of a plurality of pixel points. Each pixel point may be assigned a different pixel value. The different pixel values may represent different objects in the scene. All the pixel points may be classified into three categories: valid points, obstacle points and unknown points.

The above-mentioned target region includes a narrow region inaccessible by the movable object. For example, in partial schematic diagrams of the map image as shown in FIGS. 2 and 3, a region 210 in FIG. 2 and a region 310 in FIG. 3 are both narrow regions inaccessible by the cleaning robot. In this exemplary embodiment, the narrow region may be a regular rectangle, an irregular strip shape, etc. The dimensions of the narrow region are not specifically limited in the present disclosure. Any region that meets the feature of the narrow region and is inaccessible by the movable object may be considered as the narrow region.

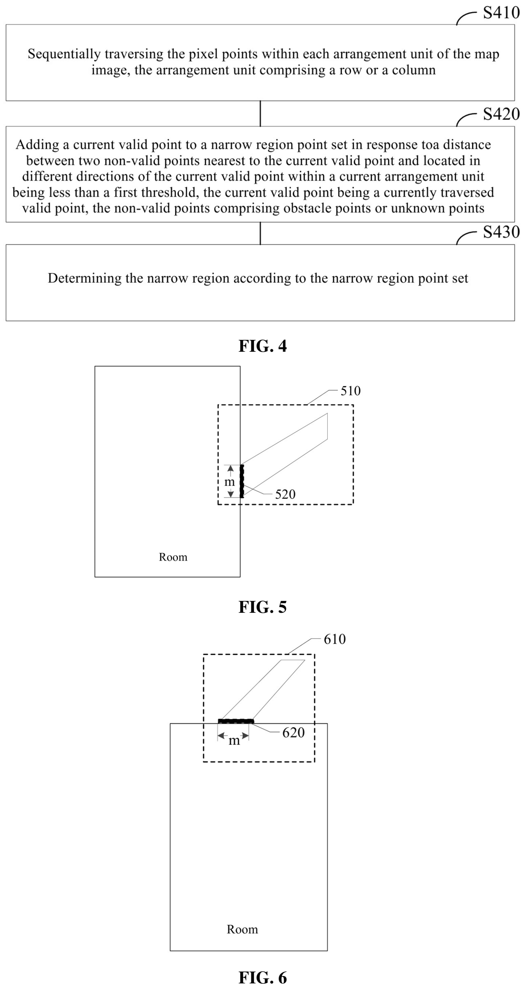

Further, as shown in FIG. 4, the step S120 may include the following steps:
step S410, sequentially traversing the pixel points within each arrangement unit of the map image, the arrangement unit including a row or a column;
step S420, adding a current valid point to a narrow region point set in response to a distance between two non-valid points nearest to the current valid point and located in different directions of the current valid point within the current arrangement unit being less than a first threshold, the current valid point being a currently traversed valid point, the non-valid points including obstacle points or unknown points; and
step S430, determining the narrow region according to the narrow region point set.

In this exemplary embodiment, the narrow region may be identified by traversing each pixel point in the map image. In the traversing process, pixels within the arrangement unit may be traversed in a preset order. The arrangement unit may include a row unit or a column unit. For example, the pixel points in each column unit may be traversed from left to right, or the pixel points in each row unit may be traversed from top to bottom, etc. The specific traversal order or traversal rule is not limited in the present disclosure.

When traversal is made to the pixel points within the current arrangement unit, the valid point that is being currently traversed may be determined first, and this valid point is taken as a starting point for identifying the narrow region. The point traversed immediately before this valid point is an unknown point. Then, the distance between two non-valid points (such as obstacle points or unknown points) nearest to this valid point and located in two different directions of this valid point is determined. When the distance is less than the first threshold, it indicates that the distance between the two points is too small to allow the movable object to pass through, and the region where this valid point is located may be the narrow region, so this valid point may be added to the narrow region point set. The first threshold is a criterion for determining whether the distance between the pixel points meets the feature of the narrow region, and may be customized according to actual circumstances. For example, a small value, such as a 3-pixel distance or 5-pixel distance, may be set as the first threshold according to experience. The first threshold may also be set according to the size of the movable object. For example, when the diameter of the cleaning robot is 25 cm, and one pixel point usually represents 50 mm, the first threshold may be set to 6 pixels. The narrow region point set is configured to record the pixel points that may constitute the narrow region, and may generate the narrow region based on the pixel points in the narrow region point set when certain conditions are met, and then perform processing steps on the narrow region. Illustration is made by taking the traversal in the column unit as an example, the currently traversed valid pixel point is first determined in the column unit, upward searching is made to find the nearest obstacle point or unknown point, then downward searching is made to find the nearest obstacle point or unknown point, and the pixel distance between the two found points is determined. The current valid point is added to the narrow region point set when the pixel distance is less than the first threshold.

In this exemplary embodiment, when the distance between the two non-valid points nearest to the current valid point and located in different directions of the current valid point is less than the first threshold, the pixel points in the narrow region point set may be directly processed after the current valid point is added to the narrow region point set, to realize map optimization processing, or the pixel points in the narrow region point set may be processed after the number or specification of the pixel points in the narrow region point set meets certain conditions, to realize map optimization processing. For example, the pixel values of the pixel points in the narrow region point set are updated after the pixel points in the narrow region point set meet the requirement for forming a specific rectangle or other particular-specification figures.

In order to save computing resources and improve traversal efficiency, in an exemplary embodiment, the step S120 may further include the following step:
adding two non-valid points nearest to the current valid point and located in different directions of the current valid point within the current arrangement unit, and other pixel points between the two non-valid points to the narrow region point set when adding the current valid point to the narrow region point set.

That is, in the process of S410-S430, when it is determined that the valid point is to be added to the narrow region point set, the two non-valid points nearest to the valid point and located in two different directions of the valid point, and other pixel points between the two non-valid points are also points that need to be processed. Because the pixel points between the non-valid points in the two directions are all located in a region that the movable object cannot pass through, the two non-valid points nearest to the current valid point and located in two different directions of the current valid point within the current arrangement unit, and other pixel points between the two non-valid points may also be added to the narrow region point set, and then the narrow region may be determined according to the narrow region point set.

In an exemplary embodiment, the step S120 may further include the following steps:
after traversing the pixel points within the current arrangement unit, increasing a length parameter of the narrow region point set by one in response to at least one pixel point within the current arrangement unit being added to the narrow region point set; and
identifying a region formed by pixel points within the narrow region point set as a narrow region when the length parameter is greater than or equal to a second threshold.

The length parameter of the narrow region point set is a length feature of the narrow region, and its initial value may be set to 0. The second threshold is another criterion for determining whether a pixel region meets the feature of the narrow region. The setting of the second threshold may be customized as required, and usually the second threshold may be set greater than the first threshold. After the pixel points within the current arrangement unit are traversed, the length parameter of the narrow region point set is increased by one in response to at least one pixel point within the current arrangement unit being added to the narrow region point set, and a region formed by the pixel points in the narrow region point set may be identified as the narrow region when the length parameter is greater than or equal to the second threshold. For example, FIG. 5 shows a partial schematic diagram of a map image. When a through-wall region 510 on the right side of a room is traversed, the valid points may be determined within a current column unit 520 by sequentially traversing the column units from left to right. The current valid point and other pixel points between the two non-valid points are added to the narrow region point set in response to the distance m between the two non-valid points nearest to the current valid point and located in different directions of the current valid point being less than the first threshold. After that, the next column unit of the current column unit 520 is traversed, and the length parameter of the narrow region point set is increased by one, which may be expressed as *n = n +* 1. Then, whether the length parameter *n* + 1 is greater than the second threshold or not is determined. The region formed by the pixel points in the narrow region point set is identified as the narrow region when the length parameter is greater than or equal to the second threshold. Alternatively, in a partial schematic diagram of another map image shown in FIG. 6, when a through-wall region 610 on the upper side of the room is traversed, the valid point is first determined within a current row unit 620. The current valid point and other pixel points between the two non-valid points are added to the narrow region point set in response to the distance m between the two non-valid points nearest to the current valid point and located in different directions of the current valid point being less than the first threshold. After that, the next row unit of the current row unit 620 is traversed, and the length parameter of the narrow region point set is increased by one, which may be expressed as *n = n +* 1. Then, whether the length parameter *n +* 1 is greater than the second threshold or not is determined. The region formed by the pixel points in the narrow region point set is determined as the narrow region when the length parameter is greater than or equal to the second threshold.

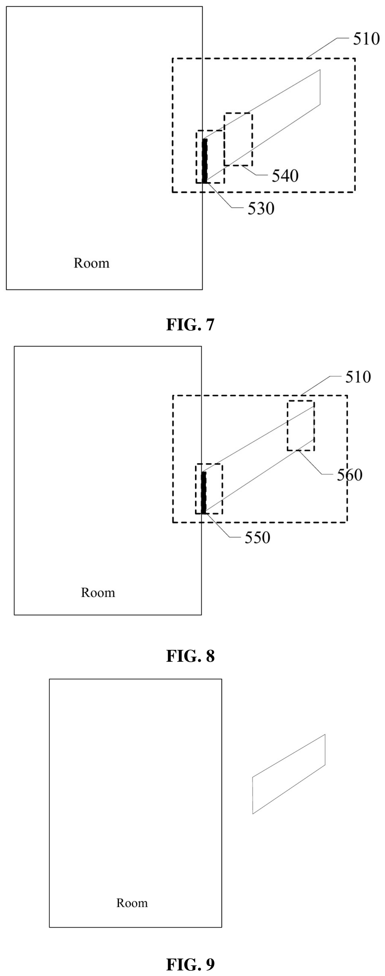

It should be noted that the determination of the narrow region does not necessarily correspond to a certain narrow region in the map, and the narrow region may be formed for regional processing as long as the regional feature of the narrow region is met. For example, as shown in FIG. 7, taking the through-wall region 510 shown in FIG. 5 as an example, a narrow region 530 may be determined after all the pixels in the region 530 are traversed, and a narrow region 540 may also be obtained by continuing the traversal; alternatively, the pixels in the narrow region may be temporarily left unprocessed, and then be processed in a unified manner after determining the entire through-wall region 510 as the narrow region, which is not limited in the present disclosure. In addition, FIGS. 5 and 6 are merely illustrative. Specifically, in the traversing process, the determined narrow region may be determined from different directions due to the different traversal orders and directions. For example, as shown in FIG. 8, taking the through-wall region shown in FIG. 5 as an example, the narrow region 550 or the narrow region 560 may be determined due to the different traversing directions.

In an exemplary embodiment, the step S410 may include the following step:
sequentially traversing each column of pixel points of the map image in a width direction of the map image, and sequentially traversing each row of pixel points of the map image in a height direction of the map image.

In the exemplary embodiment of the present disclosure, the pixel points in the map image may be traversed in width and height directions of the map image. Specifically, each column of pixel points of the map image may be sequentially traversed in the width direction of the map image, and each row of pixel points of the map image may be sequentially traversed in the height direction of the map image.

In an exemplary embodiment, the step S130 may include the following step:
adjusting pixel points in the narrow region to unknown points.

In this exemplary embodiment, when it is determined that the region formed by the pixel points in the narrow region set is the narrow region, the pixel points in the narrow region may be adjusted to unknown points to update the map image, and after the adjustment, the pixel points in the narrow region may be regarded as invalid points and removed from an initial map image to beautify the map image. For example, the schematic diagram shown in FIG. 9 may be obtained after the narrow region shown in FIG. 8 is processed.

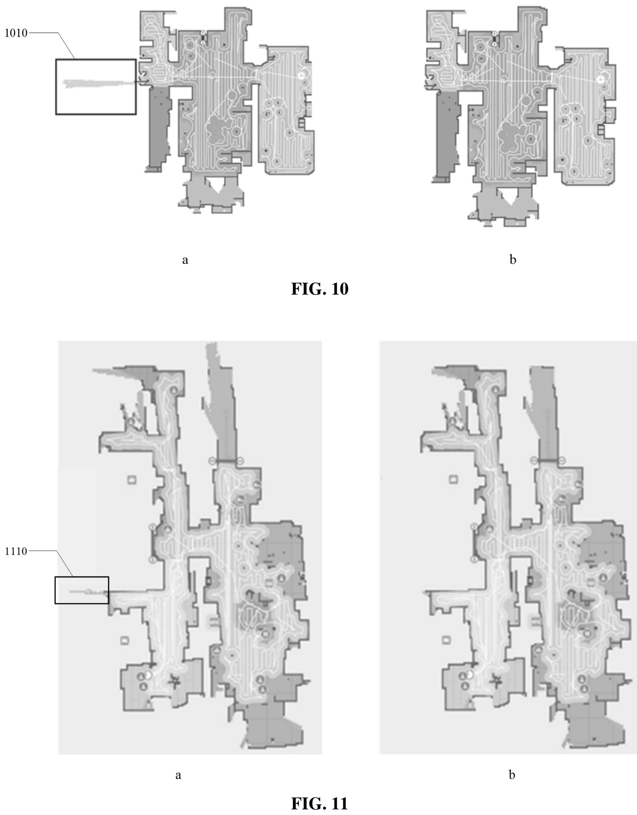

FIG. 10 shows comparative schematic diagrams of the map image before and after processing, and optimization processing may be performed on the map image *a* having a narrow region 1010 to obtain the map image *b*. FIG. 11 shows comparative schematic diagrams of another map image before and after processing, and optimization processing may be performed on the map image *a* having a narrow region 1110 to obtain the map image *b.*

In this exemplary embodiment, the pixel points may be adjusted in real time in the traversing process, and the pixel points may also be adjusted periodically or quantitatively in batches. For example, the pixel points that have been determined to be in the narrow region are adjusted to unknown points at regular intervals, or the pixel points are adjusted to unknown points after the number of pixel points determined to be adjusted exceeds a certain number.

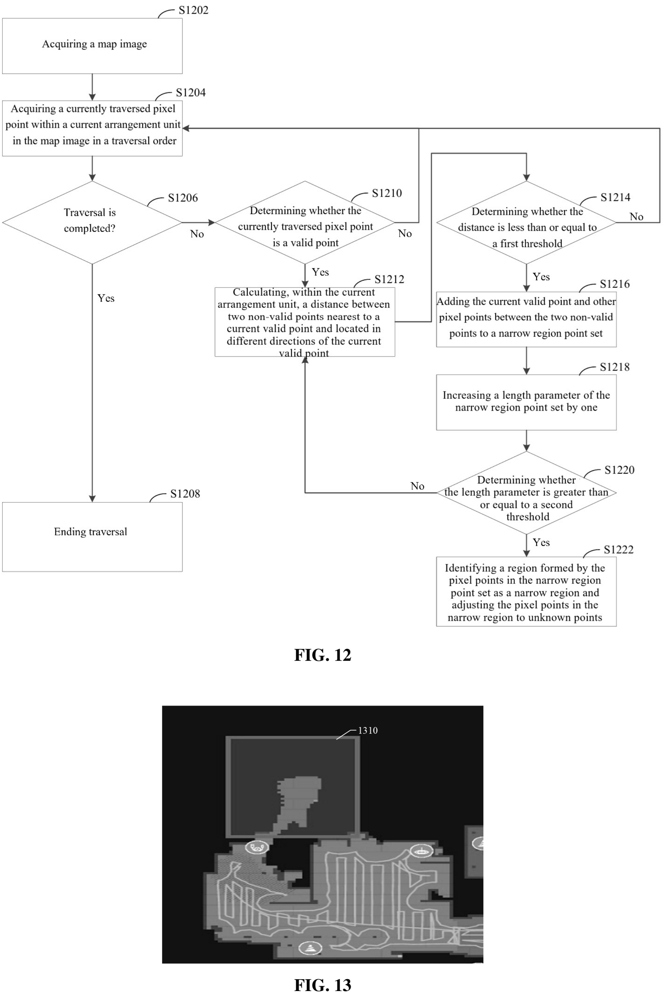

FIG. 12 schematically shows another schematic flowchart of identifying and processing the narrow region according to an exemplary embodiment, which specifically may include the following steps:
step S1202, acquiring a map image;
step S1204, acquiring a currently traversed pixel point within a current arrangement unit in the map image in a traversal order;
step S1206, determining whether traversal is completed or not;
if the traversal is completed, executing step S1208 to end a traversal process;
if the traversal is not completed, executing step S1210 to determine whether the currently traversed pixel point is a valid point;
if the currently traversed pixel point is not a valid point, skipping to the step S1204 to redetermine the currently traversed pixel point;
if the currently traversed pixel point is a valid point, executing step S1212 to calculate, within a current arrangement unit, a distance between two non-valid points nearest to a current valid point and located in different directions of the current valid point;
step S1214, determining whether the distance is less than or equal to a first threshold;
if the distance is greater than the first threshold, skipping to the step S1204 to redetermine the currently traversed pixel point;
if the distance is less than or equal to the first threshold, executing step S1216 to add the current valid point and other pixel points between the two non-valid points to a narrow region point set;
step S1218, increasing a length parameter of the narrow region point set by one;
step S1220, determining whether the length parameter is greater than or equal to a second threshold;
if the length parameter is less than the second threshold, skipping to the step S1212 to determine a next arrangement unit for traversal; and
if the length parameter is greater than or equal to the second threshold, executing step S1222 to identify a region formed by the pixel points in the narrow region point set as a narrow region and adjust the pixel points in the narrow region to unknown points.

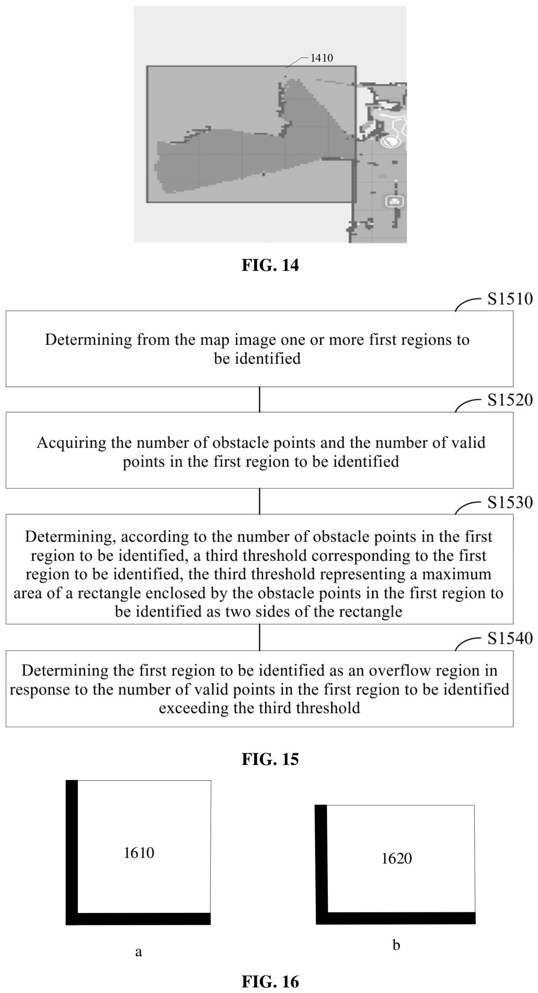

In an exemplary embodiment, the pixel points of the map image include valid points, obstacle points or unknown points, and a target region includes an overflow region. For example, in partial schematic diagrams of the map image shown in FIGS. 13 and 14, a region 1310 in FIG. 13 and a region 1410 in FIG. 14 are both overflow regions.

As shown in FIG. 15, the step S120 may include the following steps:
step S1510, determining from the map image one or more first regions to be identified;
step S 1520, acquiring the number of obstacle points and the number of valid points in the first region to be identified;
step S 1530, determining, according to the number of obstacle points in the first region to be identified, a third threshold corresponding to the first region to be identified, the third threshold representing a maximum area of a rectangle enclosed by the obstacle points in the first region to be identified as two sides of the rectangle; and
step S1540, determining the first region to be identified as an overflow region in response to the number of valid points in the first region to be identified exceeding the third threshold.

In this exemplary embodiment, by identifying the map image, it is possible to determine whether the map image includes a type of target region such as an overflow region. Specifically, one or more first regions to be identified may be first determined from the map image. The first region to be identified is a sub-image region segmented from the map image, which may be the overflow region and may also be regarded as an independent region segmented from the map image for determining the feature of the overflow region. Generally, one or more first regions to be identified may be segmented from the map image. Segmentation may be performed by separating regions on two sides of a boundary by extending the boundary based on the obstacle points on the boundary in the map image, so as to determine the first region to be identified. Then, it is possible to obtain the number of obstacle points and the number of valid points in the first region to be identified, which are the number of pixel points of the type of obstacle point and the number of pixel points of the type of valid point. By determining the number of obstacle points in the first region to be identified, the first region to be identified may be considered as the overflow region when the number of obstacle points is greater than the number of pixel points contained in the maximum area of a rectangle surrounded by the obstacle points in the first region to be identified as two sides of the rectangle.

In an exemplary embodiment, the step S1530 may include the following step:
determining, according to the number of obstacle points in the first region to be identified, the number of pixel points that may be accommodated in a square region enclosed by the obstacle points as two sides of the square, to be used as a third threshold corresponding to the first region to be identified.

The number of obstacle points is the number of pixel points of the type of obstacle point. The overflow region generally overflows from one side of a normal region, i.e., one side of the overflow region is the boundary, and there is no boundary at other positions of the overflow region. Alternatively, in some cases, there are boundaries on two sides of the region when overflow occurs at an included angle of the region. Considering that, usually, when a certain length is used as a total length of two sides of a rectangle, a square enclosed has the maximum area. As shown in FIG. 16, the map image *a* in FIG. 16 shows a region 1610 enclosed by X black pixels, and the map image b in FIG. 16 shows a region 1620 enclosed by X black pixels. All the black pixels represent the obstacle points. The regions enclosed by the same number of obstacle points as two sides of the rectangle correspond to the square region 1610 in FIG. 16a and the rectangular region 1620 in FIG. 16b respectively. The number Y1 of pixel points that may be correspondingly accommodated in the square region 1610 is greater than the number Y2 of pixel points that may be correspondingly accommodated in the rectangular region 1620. Therefore, assuming that the number of boundary pixel points in one region is X, the maximum area that can be enclosed is (X/2)2 when these X pixel points are taken as two sides of the square.

In this exemplary embodiment, the number of pixel points that may be accommodated in the region enclosed by the obstacle points as two sides of the square can be determined based on the number of obstacle points in the first region to be identified. When the number of valid pixel points in the region is Y and (x/2)2 < Y, it means that these X pixel points are insufficient to surround the two sides of the region as a boundary, thus the region is determined as the overflow region. That is, in this exemplary embodiment, the number of pixel points that may be accommodated in the square region enclosed by the obstacle points as two sides of the square can be determined according to the number of obstacle points in the first region to be identified, to be used as a third threshold corresponding to the first region to be identified.

In an exemplary embodiment, the step S1510 may include the following step:
extending a boundary in the map image, and determining from the map image one or more independent regions based on the extended boundary as one or more first regions to be identified, where the boundary before extending is a straight line constituted by obstacle points or by obstacle points and unknown points.

Considering that the overflow region is previously connected to the original normal region, it is impossible to judge different first regions to be identified. Therefore, in this exemplary embodiment, each independent first region to be identified may be separated out by means of extending the boundary, i.e., by means of determining a virtual boundary. Specifically, a preset number of pixel points may be extended in a left-right or up-down direction of the current boundary, for example, extended left, right, up or down according to a straight line constituted by the obstacle points or by the obstacle points and the unknown points that form the current boundary, so as to separate the first region to be identified from the map image by the boundary formed by the extended pixel points.

In an exemplary embodiment, extending the boundary in the map image includes:
extending the boundary from any end, and in response to an extended part being connected to the unknown points or the obstacle points other than the boundary when a length of the extended part does not exceed a fourth threshold, retaining the part extending from the any end to the connected point; and in response to the extended part being not connected to the unknown points or the obstacle points other than the boundary when the length of the extended part reaches the fourth threshold, canceling the extending from the any end.

In the specific process of extension, in order to ensure the validity of the first region to be identified obtained by extending the boundary points, avoid separating out parts that inherently cannot be the overflow region due to excessive extension and increasing the calculation amount of regional identification, in this exemplary embodiment, the length of the extended part can be determined. The boundary can be extended from any end by K pixel points, where the distance of the K pixel points is the fourth threshold. If the extended part is connected to the unknown points or obstacle points other than the boundary when the length of the extended part does not exceed the fourth threshold, then the part extending from the any end to the connected point is retained and labeled as a new boundary point; and if the extended part is not connected to the unknown points or obstacle points other than the boundary when the length of the extended part reaches the fourth threshold, then the extending from the any end is canceled, i.e., the extended part is not retained. The fourth threshold may be customized according to actual circumstances. For example, the fourth threshold may be set to 10 pixels.

In addition, in order to further ensure the validity of boundary extension, in an exemplary embodiment, the number of obstacle points or the number of both obstacle points and of unknown points, which constitute the boundary before extending, is not less than a preset number.

That is, the number of continuous pixel points constituting the boundary before extending is not less than the preset number. When the number of obstacle points is less than the preset number, or the total number of obstacle points and unknown points is less than the preset number, it indicates that a straight line formed by the obstacle points or by the obstacle points and the unknown points is short and not enough to form an obvious boundary. Therefore, the possibility of successfully determining an independent region during extension of the boundary is relatively low, or there is no need to extend the boundary. Thus, such boundaries may be filtered out without boundary extension, thereby improving the accuracy of boundary extension and avoiding waste of additional unnecessary computing resources. The preset number may be set according to specific requirements of boundary extension, and may also be customized. For example, the preset number may be set to 2 or 3, i.e., only when the number of pixel points constituting the boundary is greater than 2 or 3, can the extension be performed based on this boundary.

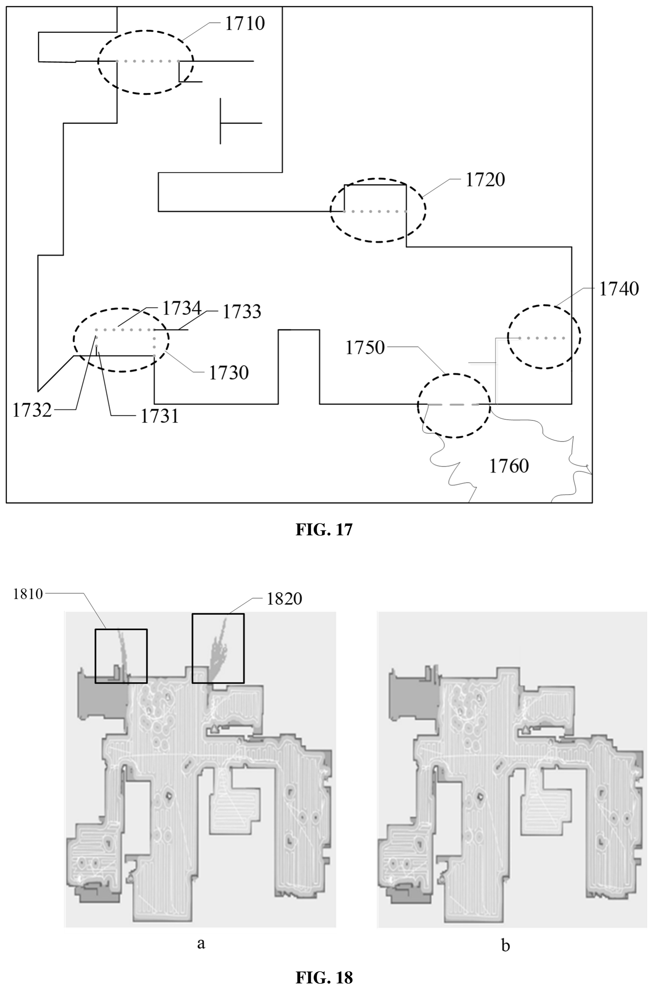

FIG. 17 shows a schematic diagram of extension of boundary points. In FIG. 17, a dotted line in a labeled box 1750 represents extended boundary points that meets extension conditions, so a region 1760 separated out may be used as the first region to be identified to identify the overflow region. The dotted lines in labeled boxes 1710, 1720, 1730 and 1740 all include the extended boundary points, but no processing is required because the boundary extension conditions are not met and the boundary extensionis unsuccessful. Taking the extended boundary points in the labeled box 1730 as an example, a straight line 1731 is a boundary before extending, and since the number of pixel points constituting this boundary is less than the preset number, the boundary points 1732 extended based on the straight line 1731 will be canceled; and a straight line 1733 is another boundary before extending, and the extension thereof will also be canceled because its extended boundary point 1734 exceeds the fourth threshold during extension based on this boundary.

In an exemplary embodiment, before extending the boundary in the map image, the map processing method may further include the following steps:
in response to the presence of an obstacle point cluster having no more than *p* pixel points, and the obstacle point cluster being surrounded by the valid points or the unknown points, modifying the adjacent obstacle points into valid points; and
in response to the presence of an unknown point cluster having no more than q pixel points, and the unknown point cluster being surrounded by the valid points or the obstacle points, modifying the adjacent unknown points into valid points,
where *p* and *q* are positive integers.

Considering that there may be isolated obstacles or unknown points in the map image due to devices and other reasons, in the process of extending the boundary, ending the extension when encountering the isolated points or obstacles may result in that the first region to be identified cannot be separated out or the first region to be identified cannot be accurately separated out. In view of this, in this exemplary embodiment, an isolated point may be first beautified before boundary extension, for example, by updating an isolated pixel point into a valid point, and then the extension process may be performed. The specific process may include: traversing each pixel point in the map image, and in response to the presence of an obstacle point cluster having no more than *p* pixel points, and the obstacle point cluster being surrounded by the valid points or the unknown points, for example, in response to the presence of one or two obstacle points surrounded by valid points or unknown points, modifying the one or two obstacle points into valid points; and in response to the presence of an unknown point cluster having no more than *q* pixel points, for example, in reponse to the presence of no more than 4 adjacent unknown point clusters surrounded by the valid points or the obstacle points, modifying these unknown points into valid points.

In an exemplary embodiment, when extending the boundary in the map image, the map processing method may further include the following steps:
generating a boundary image of the same size as the map image, and saving information of the extended boundary in the boundary image but not in the map image.

Considering that incorrect boundary information may be added when these extension points are directly modified into boundary points on the map image, in this exemplary embodiment, a boundary image of the same size as the map image may be generated during boundary extension, so as to store data of the extension of boundary point separately without saving the information of the extended boundary in the map image. The specific storage method can be achieved by storing the added boundary information in other arrays of sizes corresponding to that of a map array.

In an exemplary embodiment, the step S130 may include the following step:
adjusting valid points in the overflow region to unknown points.

In this exemplary embodiment, after the first region to be identified is determined as the overflow region, the valid points in the overflow region may be adjusted to unknown points to update the map image.

In this exemplary embodiment, the valid points may be adjusted to unknown points in a unified manner after identification of all the first regions to be identified is completed, or the valid points in the identified overflow region are adjusted to unknown points while identifying the first region to be identified.

FIG. 18 shows comparative schematic diagrams before and after the overflow region is processed. After determining the first regions to be identified 1810 and 1820 in the map image *a* in FIG. 18, identifying them as overflow regions and adjusting valid points therein, the map image indicated by the map image b in FIG. 18 can be obtained.

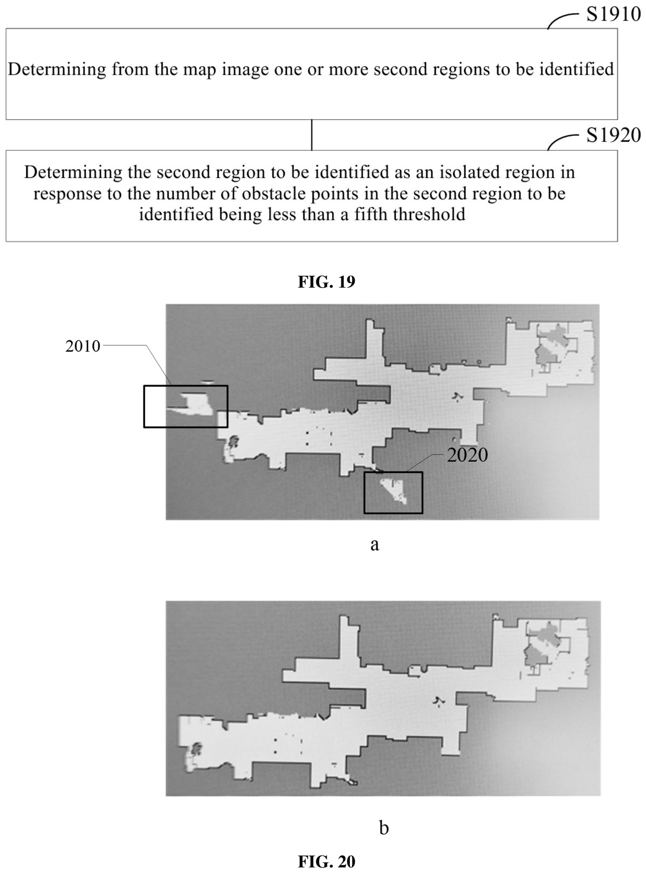

In an exemplary embodiment, the pixel points of the map image include valid points, obstacle points or unknown points, and a target region includes an isolated region. As shown in FIG. 19, the step S120 may include the following steps:
sep S1910, determining from the map image one or more second regions to be identified; and
step S1920, determining the second region to be identified as an isolated region in response to the number of obstacle points in the second region to be identified being less than a fifth threshold.

The second region to be identified is an image sub-region separated from the map image for determining the isolated region. Unlike the first region to be identified, which is generally connected with other regions of the map image and needs to be separated by boundary extension, the second region to be identified is generally disconnected from other regions. In this exemplary embodiment, after determining from the map one or more second regions to be identified, whether the second region to be identified is an isolated region that needs to be processed can be determined by judging the number of obstacle points in the second region to be identified. When the number of obstacle points is large, it is believed that the obstacle points may be points where valid obstacles are located in the map, and the obstacle points are still usable. However, when the number of obstacle points is too small and less than the fifth threshold, the second region to be identified is considered as an invalid isolated region. The fifth threshold may be determined according to constraint requirements on the isolated region. For example, the number of obstacle points may be set to be 50 as the fifth threshold, and other numbers may also be set, which is not specifically limited in the present disclosure.

In an exemplary embodiment, determining from the map image one or more second regions to be identified includes the following step:
taking a region formed by adjacent valid points and obstacle points in the map image as the second region to be identified.

In this exemplary embodiment, the valid points and the obstacle points in the map image may be determined by traversing the pixel points in the map image, the region formed by the adjacent valid points and obstacle points is taken as the second region to be identified, and different second regions to be identified may be spaced by the unknown points.

In an exemplary embodiment, the step S1910 may include the following step:
determining from the map image one or more second regions to be identified when map optimization processing has been performed on the narrow region and/or the overflow region in the map image.

In practical application, in addition to the isolated regions that already exist in the map image needing to be processed, in some cases, there may not be any isolated region in the map image originally, but new isolated regions are generated after identifying and processing the narrow regions and overflow regions in the map image. Therefore, in this exemplary embodiment, the second region to be identified that meets feature conditions of the pixel points may be determined from the map image when map optimization processing is performed on the narrow regions, overflow regions or both the narrow regions and the overflow regions in the map image.

In an exemplary embodiment, performing map optimization processing on the target region includes the following step:
adjusting pixel points in the isolated region to unknown points.

In this exemplary embodiment, after the second region to be identified is determined as the isolated region, the pixel points in the isolated region may be adjusted to unknown points to update the map image, and after the adjustment, the pixel points in the isolated region may be regarded as invalid points and removed from an initial map image so as to beautify the map image.

FIG. 20 shows comparative schematic diagrams before and after the isolated region is processed. After determining the first regions to be identified 2010 and 2020 in the map image *a* in FIG. 20, identifying them as isolated regions and adjusting pixel points therein, the map image indicated by the map image *b* in FIG. 20 can be obtained.

In this exemplary embodiment, the pixel points in the isolated regions may be adjusted to unknown points while identifying the isolated regions, or the pixel points in the isolated regions are adjusted to unknown points in a unified manner after all the isolated regions are identified, which is not specifically limited in the present disclosure.

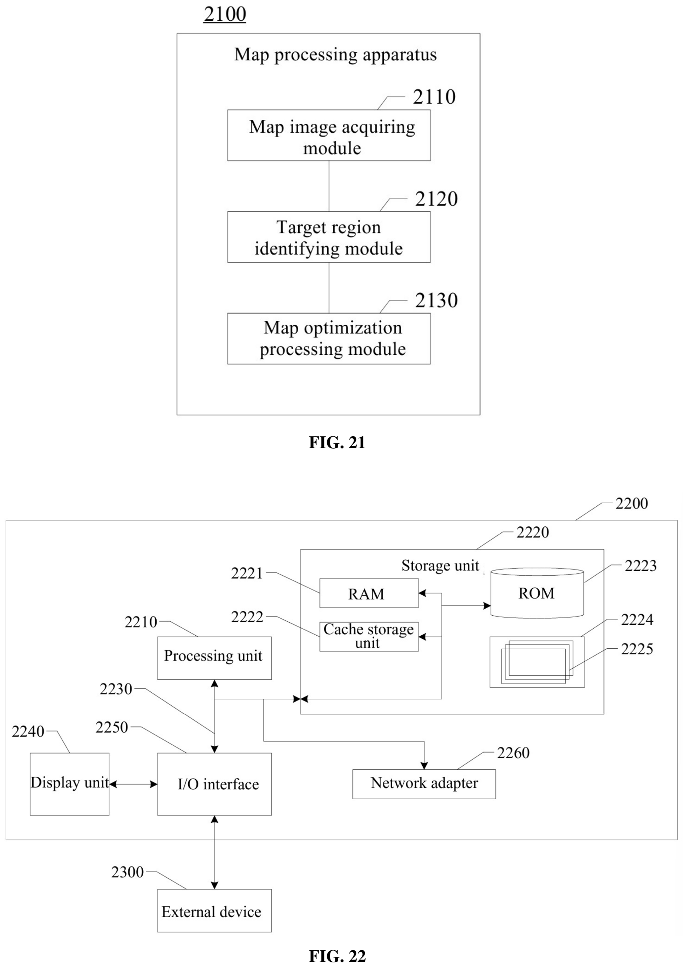

In an exemplary embodiment of the present disclosure, a map processing apparatus is also provided. As shown in FIG. 21, the map processing apparatus 2100 may include a map image acquiring module 2110, a target region identifying module 2120 and a map optimization processing module 2130.

The map image acquiring module 2110 is configured to acquire a map image, the map image being intended to represent an accessible region of a movable object.

The target region identifying module 2120 is configured to identify from the map image a target region having a preset feature.

The map optimization processing module 2130 is configured to perform map optimization processing on the target region.

In an exemplary embodiment of the present disclosure, pixel points of the map image include valid points, obstacle points or unknown points. The target region includes a narrow region inaccessible by the movable object. The target region identifying module includes: a pixel point traversing module configured to sequentially traverse the pixel points within each arrangement unit of the map image, the arrangement unit including a row or a column; a valid point adding unit configured to add, a current valid point to a narrow region point set in response to a distance between two non-valid points nearest to the current valid point and located in different directions of the current valid point within a current arrangement unit being less than a first threshold, the current valid point being a currently traversed valid point, the non-valid points including obstacle points or unknown points; and a region determining unit configured to determine a narrow region according to the narrow region point set.

In an exemplary embodiment of the present disclosure, the target region identifying module further includes a pixel point adding unit configured to add two non-valid points nearest to the current valid point and located in different directions of the current valid point within the current arrangement unit, and other pixel points between the two non-valid points to the narrow region point set when adding the current valid point to the narrow region point set.

In an exemplary embodiment of the present disclosure, the target region identifying module further includes: a length parameter updating unit configured to, after traversing the pixel points within the current arrangement unit, increase a length parameter of the narrow region point set by one in response to at least one pixel point within the current arrangement unit being added to the narrow region point set; and a region identifying unit configured to identify a region formed by pixel points in the narrow region point set as the narrow region when the length parameter is greater than or equal to a second threshold.

In an exemplary embodiment of the present disclosure, the pixel point traversing unit includes: a sequential traversing subunit configured to sequentially traverse each column of pixel points of the map image in a width direction of the map image, and sequentially traverse each row of pixel points of the map image in a height direction of the map image.

In an exemplary embodiment of the present disclosure, the map optimization processing module includes: a first processing unit configured to adjust pixel points in the narrow region to unknown points.

In an exemplary embodiment of the present disclosure, pixel points of the map image include valid points, obstacle points or unknown points; the target region includes an overflow region; and the target region identifying module includes: a first region determining unit configured to determine from the map image one or more first regions to be identified; a quantity acquiring unit configured to acquire the number of obstacle points and the number of valid points in the first region to be identified; a threshold determining unit configured to determine, according to the number of obstacle points in the first region to be identified, a third threshold corresponding to the first region to be identified, the third threshold representing a maximum area of a rectangle enclosed by the obstacle points in the first region to be identified as two sides of the rectangle; and an overflow region determining unit configured to determine the first region to be identified as an overflow region in response to the number of valid points in the first region to be identified exceeding the third threshold.

In an exemplary embodiment of the present disclosure, the threshold determining unit includes: a pixel point quantity equivalence subunit configured to determine, according to the number of obstacle points in the first region to be discriminated, the number of pixel points that may be accommodated in a square region enclosed by the obstacle points as two sides of the square, to be used as a third threshold corresponding to the first region to be identified.

In an exemplary embodiment of the present disclosure, the first region determining unit includes: a boundary extending subunit configured to extend a boundary in the map image, and determine from the map image one or more independent regions based on the extended boundary as the first region(s) to be identified, where the boundary before extending is a straight line constituted by obstacle points or both obstacle points and unknown points.

In an exemplary embodiment of the present disclosure, the boundary extending subunit is configured to: extend the boundary from any end, and in response to the extended part being connected to the unknown points or the obstacle points other than the boundary when a length of the extended part does not exceed a fourth threshold, retain the part extending from the any end to the connected point; and in response to the extended part being not connected to the unknown points or the obstacle points other than the boundary when the length of the extended part reaches the fourth threshold, cancel the extending from the any end.

In an exemplary embodiment of the present disclosure, the map processing apparatus may further include: a first modifying module configured to, in response to the presence of an obstacle point cluster having no more than *p* pixel points and the obstacle point cluster being surrounded by the valid points or the unknown points before extending a boundary in the map image, modify the adjacent obstacle points into valid points; and a second modifying module configured to, in response to the presence of an unknown point cluster having no more than q pixel points and the unknown point cluster being surrounded by the valid points or the obstacle points, modify the adjacent unknown points into valid points, where *p* and *q* are positive integers.

In an exemplary embodiment of the present disclosure, the number of obstacle points or the number of both obstacle points and unknown points, which constitute the boundary before extending, is not less than a preset quantity.

In an exemplary embodiment of the present disclosure, the map processing apparatus may further include: a boundary information processing module configured to, when extending the boundary in the map image, generate a boundary image of the same size as the map image, and save information of the extended boundary in the boundary image but not in the map image.

In an exemplary embodiment of the present disclosure, the map optimization processing module includes: a second processing unit configured to adjust valid points in the overflow region to unknown points.

In an exemplary embodiment of the present disclosure, pixel points of the map image include valid points, obstacle points or unknown points; the target region includes an isolated region; and the target region identifying module includes: a second region determining unit configured to determine from the map image one or more second regions to be identified; and an isolated region determining unit configured to determine the second region to be identified as an isolated region in response to the number of obstacle points in the second region to be identified being less than a fifth threshold.

In an exemplary embodiment of the present disclosure, the second region determining unit is configured to take a region formed by adjacent valid points and obstacle points in the map image as the second region to be identified.

In an exemplary embodiment of the present disclosure, the second region determining unit is configured to: determine from the map image one or more second regions to be identified when map optimization processing has been performed on the narrow region and/or the overflow region in the map image.

In an exemplary embodiment of the present disclosure, the map optimization processing module includes: a third processing unit configured to adjust pixel points in the isolated region to unknown points.

The specific details of the modules of the map processing apparatuses have been described in detail in the corresponding map processing methods, and thus will not be repeated herein.

It should be noted that although several modules or units of the device for action execution are mentioned in the above detailed description, this division is not mandatory. Actually, according to the embodiments of the present disclosure, the features and functions of two or more modules or units described above may be embodied in one module or unit. On the contrary, the feature and function of one module or unit described above can be further divided into a plurality of modules or units to be embodied.

In an exemplary embodiment of the present disclosure, an electronic device capable of implementing the above method is also provided. For example, the electronic device may be a cleaning robot capable of implementing the above method.

Those skilled in the art can understand that various aspects of the present disclosure can be implemented as systems, methods or program products. Therefore, various aspects of the present disclosure can be implemented as hardware only, software (including firmware, microcode, etc.) only, or a combination of hardware and software, which can be collectively referred to as "circuit", "module" or "system" here.

An electronic device 2200 according to an exemplary embodiment of the present disclosure is described below with reference to FIG. 22. The electronic device 2200 shown in FIG. 22 is merely an example and should not impose any limitations on the functionality or scope of use of embodiments of the present disclosure.

As shown in FIG. 22, the electronic device 2200 is represented in the form of a general-purpose computing device. Components of the electronic device 2200 may include, but are not limited to, at least one processing unit 2210 described above, at least one storage unit 2220 described above, a bus 2230 connecting different system assemblies (including the storage unit 2220 and the processing unit 2210), and a display unit 2240.

The storage unit stores program codes executable by the processing unit 2210, such that the processing unit 2210 performs the steps according to various exemplary embodiments of the present disclosure described in the above-mentioned "exemplary method" section of the present Description. For example, the processing unit 2210 may execute steps S110-S130 as shown in FIG. 1, steps S410-S430 shown in FIG. 4, steps S1202-S1222 shown in FIG. 12, and steps S1510-S1540 shown in FIG. 15, and may also execute the steps S1910-S1920 shown in FIG. 19.

The storage unit 2220 may include a readable medium in the form of a volatile storage unit, such as a random access memory (RAM) 2221 and/or a cache storage unit 2222, and may further include a read-only memory (ROM) 2223.

The storage unit 2220 may further include a program/utility tool 2224 with a set of (at least one) program modules 2225. Such program modules 2225 include, but are not limited to, an operating system, one or more application programs, other program modules and program data, and each or some combinations of these examples may include the implementation of a network environment.

The bus 2230 may represent one or more of several types of bus structures, including a memory cell bus or a memory cell controller, a peripheral bus, an accelerated graphics port, a processing unit, or a local bus using any of a variety of bus structures.

The electronic device 2200 may also communicate with at least one external device 2300 (such as a keyboard, a pointing device, and a Bluetooth device), and may also communicate with at least one device that enable(s) a user to interact with the electronic device 2200, and/or communicate with any device (such as a router, or a modem) that enables the electronic device 2200 to communicate with at least one other computing device. This communication may be performed via an input/output (I/O) interface 2250. In addition, the electronic device 2200 may also communicate with at least one network (for example, a local region network (LAN), a wide region network (WAN) and/or a public network, e.g., the Internet) via a network adapter 2260. As shown in the figure, the network adapter 2260 communicates with other modules of the electronic device 2200 via the bus 2230. It should be understood that although not shown in the figure, other hardware and/or software modules may be used in conjunction with the electronic device 2200, including but not limited to: microcode, device drivers, redundant processing units, external disk drive arrays, and redundant arrays of independent disks (RAID) systems, tape drives, and data backup storage systems.

Through the descriptions of the above embodiments, it is easy for those skilled in the art to understand that the exemplary embodiments described herein can be implemented by software or a combination of software and necessary hardware. Therefore, the technical solution according to the embodiment of the present disclosure can be embodied in the form of a software product. The software product can be stored in a non-volatile storage medium (a CD-ROM, a USB flash drive, a mobile hard disk, etc.) or on the network, and includes several instructions to make a computing device (which may be a personal computer, a server, a terminal apparatus, a network device, or the like) execute the method according to the exemplary embodiment of the present disclosure.

In an exemplary embodiment of the present disclosure, there is further provided a computer-readable storage medium having stored thereon a program product capable of implementing the above-described method of the present Description. In some possible embodiments, various aspects of the present disclosure may also be implemented in the form of a program product including program codes which, when the program product runs on a terminal device, cause the terminal device to execute the steps according to various exemplary embodiments of the present disclosure described in the above "Exemplary Method" section of the present Description.

A program product for implementing the above method according to an embodiment of the present disclosure may be in the form of a portable compact disk read-only memory (CD-ROM) and include program codes, and may run on a terminal device such as a personal computer. However, the program product of the present disclosure is not limited thereto, and in this document, the readable storage medium may be any tangible medium which contains or stores a program, and the program may be used by or in combination with an instruction execution system, apparatus or device.

The program product may be any combination of one or more readable media. The readable medium may be a readable signal medium or a readable storage medium. The readable storage medium may be, for example, but not limited to, an electrical, magnetic, optical, electromagnetic, infrared, or semiconductor system, apparatus or device, or any combination of the above. More specific examples (a non-exhaustive list) of the readable storage medium may include: an electrical connection with one or more wires, a portable disk, a hard disk, a random-access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

The computer-readable signal medium may include a data signal propagated in a baseband or as part of a carrier wave, and readable program codes are carried in the data signal. This propagated data signal may be in many forms, including but not limited to an electromagnetic signal, an optical signal, or any suitable combination of the above. The readable signal medium may also be any readable medium other than the readable storage medium, and the readable medium may send, propagate, or transmit the program for use by or in combination with an instruction execution system, apparatus or device.

The program code contained on the readable medium may be transmitted by any suitable medium, including, but not limited to: wireless, wired lines, optical cables, RF, etc., or any suitable combination of the above.

The program code for executing the operations of the present disclosure may be written in one programming language or any combination of a plurality of programming languages. The above programming languages include object-oriented programming languages, such as Java and C++, and also include conventional procedural programming languages, such as "C" language or similar programming languages. The program codes may execute entirely on a user computing device, partly on a user device, as an independent software package, partly on a user computing device and partly on a remote computing device, or entirely on a remote computing device or a server. In the case of the remote computing device, the remote computing device may be connected to the user computing device through any type of network, including a local region network (LAN) or wide region network (WAN), or may be connected to an external computing device (for example, via the Internet using an internet service provider).

In addition, the above drawings are merely schematic illustrations of the processing included in the method according to the exemplary embodiment of the present disclosure, and are not for limiting purposes. It is easy to understand that the processing shown in the above drawings do not indicate or limit the time sequence of these processing. In addition, it is also easy to understand that these processing can be performed synchronously or asynchronously in a plurality of modules, for example.

Other embodiments of the present disclosure will be apparent to those skilled in the art from consideration of the description and practice of the present disclosure disclosed herein. The present disclosure is intended to cover any variations, uses, or adaptations of the present disclosure following the general principles thereof and including common knowledge or commonly used technical measures which are not disclosed herein. The description and the embodiments are to be considered as exemplary only, with a true scope and spirit of the present disclosure indicated by the claims.

It should be appreciated that the present disclosure is not limited to the exact construction that has been described above and illustrated in the accompanying drawings, and that various modifications and changes can be made without departing from the scope of the present disclosure. It is intended that the scope of the present disclosure is only defined by the appended claims.

## Claims

1. A map processing method, comprising:
acquiring a map image, the map image being intended to represent an accessible region of a movable object;
identifying from the map image a target region having a preset feature; and
performing map optimization processing on the target region.

2. The method according to claim 1, wherein pixel points of the map image comprise valid points, obstacle points or unknown points; the target region comprises a narrow region inaccessible by the movable object; and identifying from the map image the target region having the preset feature comprises:
sequentially traversing the pixel points within each arrangement unit of the map image, the arrangement unit comprising a row or a column;
adding a current valid point to a narrow region point set in response to a distance between two non-valid points nearest to the current valid point and located in different directions of the current valid point within a current arrangement unit being less than a first threshold, the current valid point being a currently traversed valid point, the non-valid points comprising obstacle points or unknown points; and
determining the narrow region according to the narrow region point set.

3. The method according to claim 2, wherein identifying from the map image the target region having the preset feature further comprises:
adding two non-valid points nearest to the current valid point and located in different directions of the current valid point within the current arrangement unit, and other pixel points between the two non-valid points to the narrow region point set when adding the current valid point to the narrow region point set.

4. The method according to claim 2, wherein identifying from the map image the target region having the preset feature further comprises:
increasing, after traversing pixel points within the current arrangement unit, a length parameter of the narrow region point set by one in response to at least one pixel point within the current arrangement unit being added to the narrow region point set; and
identifying a region formed by pixel points in the narrow region point set as the narrow region when the length parameter is greater than or equal to a second threshold.

5. The method according to any one of claims 2 to 4, wherein sequentially traversing the pixel points within each arrangement unit of the map image comprises;
sequentially traversing each column of pixel points of the map image in a width direction of the map image, and sequentially traversing each row of pixel points of the map image in a height direction of the map image.

6. The method according to any one of claims 2 to 5, wherein performing map optimization processing on the target region comprises:
adjusting pixel points in the narrow region to unknown points.

7. The method according to any one of claims 1 to 6, wherein pixel points of the map image comprise valid points, obstacle points or unknown points; the target region comprises an overflow region; and identifying from the map image the target region having the preset feature comprises:
determining from the map image one or more first regions to be identified;
acquiring a number of obstacle points and a number of valid points in the first region to be identified;
determining, according to the number of obstacle points in the first region to be identified, a third threshold corresponding to the first region to be identified, the third threshold representing a maximum area of a rectangle enclosed by the obstacle points in the first region to be identified as two sides of the rectangle; and
determining the first region to be identified as the overflow region in response to the number of valid points in the first region to be identified exceeding the third threshold.

8. A map processing apparatus, comprising:
a map image acquiring module, configured to acquire a map image, the map image being intended to represent an accessible region of a movable object;
a target region identifying module, configured to identify from the map image a target region having a preset feature; and
a map optimization processing module, configured to perform map optimization processing on the target region.

9. A computer-readable storage medium having a computer program stored thereon, wherein the computer program, when executed by a processor, causes the processor to implement the map processing method according to any one of claims 1 to 7.

10. An electronic device, comprising:
a processor; and
a memory configured to store executable instructions of the processor,
wherein the processor is configured to execute the map processing method according to any one of claims 1 to 7 by executing the executable instructions.
